Europäisches Patentamt

European Patent Office

Office européen des brevets

(11) Numéro de publication: **0 222 634**
**A1**

## (12) DEMANDE DE BREVET EUROPEEN

(21) Numéro de dépôt: 86402168.8

(22) Date de dépôt: 02.10.86

(51) Int. Cl.⁴: **B 29 C 67/16**
C 08 J 9/00, C 08 K 7/02,
F 16 L 59/02

(30) Priorité: 03.10.85 FR 8514646

(43) Date de publication de la demande:
20.05.87 Bulletin 87/21

(84) Etats contractants désignés:
DE ES GB IT NL SE

(71) Demandeur: HUTCHINSON
2 rue Balzac
F-75008 Paris (FR)

(72) Inventeur: Argy, Gilles
15ter, rue Nationale
F-78940 La Queue en Yvelines (FR)

Cheymol, André
15, route de Descartes
F-86220 Dangé (FR)

Phalip, Patricia
Résidence du Parc
F-45200 Montargis (FR)

Verschave, Adrien
392 Rue Peynault Amilly
F-45200 Montargis (FR)

(74) Mandataire: Orès, Bernard et al
Cabinet ORES 6, Avenue de Messine
F-75008 Paris (FR)

(54) Materiau d'isolation thermique, procédé pour sa fabrication et moyen d'isolation comportant un tel materiau.

(57) La présente invention est relative à un matériau d'isolation thermique, ainsi qu'à un procédé pour sa fabrication.

Ce matériau comporte une charge noyée dans une matrice réalisée en un matériau appartenant à la famille des élastomères, ladite charge étant sous forme de fibres creuses notamment sous forme de fibres de verre.

Application notamment à l'isolation thermique des canalisations ou conduites sous-marines, en particulier celles de transport de fluide comme du gaz ou de l'huile extrait de champs pétroliers off-shore.

EP 0 222 634 A1

**Description**

"MATERIAU D'ISOLATION THERMIQUE, PROCEDE POUR SA FABRICATION ET MOYEN D'ISOLATION COMPORTANT UN TEL MATERIAU".

L'invention a pour objet un matériau d'isolation thermique, un procédé pour sa fabrication, ainsi que des moyens d'isolation comportant un tel matériau.

La Demanderesse a déjà proposé, pour l'isolation thermique de canalisations ou conduites sous-marines de transport d'huile ou de gaz extrait lors de l'exploitation de champs pétroliers off-shore, des réalisations comportant une gaine en un matériau à faible coefficient de conductibilité thermique, par exemple un matériau composite incorporant des micro-sphères ou microbilles de verre creuses dans une matrice choisie dans la famille des élastomères (Demande de Brevet français No 85-l2332 du l3 Août l985).

Un tel matériau s'est révélé totalement satisfaisant pour sa mise en oeuvre dans le domaine de la protection de conduites sous-marines utilisées pour l'exploitation de champs pétrolifères off-shore ou, de façon générale,pour l'isolation thermique de canalisations transportant un fluide présentant un gradient thermique élevé avec l'environnement, comme par exemple des canalisations enterrées de chauffage urbain.

Cependant, en poursuivant ses recherches, la Demanderesse a maintenant constaté, de manière surprenante, qu'en incorporant dans la matrice en élastomère, non pas des micro-sphères ou micro-billes de verre creuses, mais d'autres produits elle obtenait des matériaux composites satisfaisant aux conditions exigées pour les applications mentionnées ci-dessus, c'est-à-dire présentant de bonnes caractéristiques d'isolation thermique, résistant aux pressions hydrostatiques élevées qui existent au fond de la mer et conservant leurs propriétés aux températures d'utilisation qui peuvent être de l'ordre de l20°C.

La présente invention s'est en conséquence donné pour but de pourvoir à un matériau d'isolation ther mique qui réponde aussi bien aux nécessités de la pratique que les matériaux visant au même but proposés par la Demanderesse dans sa Demande précédente, mais qui, comportant des produits différents, accroisse encore le champ d'application de tels matériaux.

Un matériau d'isolation thermique selon l'invention, comportant une charge noyée dans une matrice réalisée en un matériau appartenant à la famille des élastomères est caractérisée en ce que ladite charge est sous forme de fibres creuses.

Celles-ci peuvent être en verre ou en toute matière plastique propre à être incorporée et vendue adhérente à la matrice.

On peut citer, parmi les matériaux élastomères constitutifs de cette dernière, le caoutchouc naturel, le polychloroprène, les copolymères styrène-butadiène (SBR), les copolymères butadiène-acrylonitrile (NBR), le polynorbornène, les caoutchouc butyle, les éthylène-propylène-diènes monomères (EPDM), les élastomères de polyuréthanne (dérivés de polyesters ou de polyéthers), etc...

Les fibres creuses peuvent être fragmentées, et ainsi en tronçons d'une longueur comprise entre 5 et 50 ou 60 millimètres.

En variante, les fibres sont continues et leur longueur est de l'ordre de celle nécessaire à la réalisation d'un élément de pipe-line autour duquel elles sont enroulées.

Les fibres mises en oeuvre sont d'un denier compris entre 3 et 40 décitex.

Dans certaines réalisations on fait avantageusement application de fibres creuses fermées à leurs extrémités.

La proportion de fibres creuses, sous forme de fibres de verre ou de polyester ou de polyamide ou de polyacrilonitrile est avantageusement de 30 à 80 % en volume par rapport à la matrice.

Pour la liaison à cette dernière des fibres creuses, l'invention fait application d'un agent de pontage.

Celui-ci, qui peut être du type isocyanate ou du type silane organo fonctionnel dans le cas de fibres de verre creuses, ou du type d'un bain résorcine-formol dans le cas de fibres creuses en polyamide ou polyester est présent dans une proportion comprise entre l et l0 % en poids par rapport à la matrice élastomère.

Le matériau selon l'invention a une densité comprise entre environ 0,4 et 0,75 et son coefficient de conductivité thermique $\lambda$ est compris entre environ l00 et l50 mWm$^{-1}$K$^{-1}$.

Le procédé selon l'invention, pour la fabrication d'un matériau tel que défini ci-dessus, est caractérisé en ce qu'on incorpore la charge de fibres creuses dans la matrice à l'état liquide ou pulvérulent, en ce qu'on mélange la charge et la matrice sans application d'efforts de cisaillement importants, - en tout cas notablement inférieurs à ceux usuellement mis en oeuvre dans le mélange des élastomères -, jusqu'à obtention d'un produit homogène et en ce qu'on soumet le produit à un traitement de réticulation.

Dans une forme de réalisation le traitement de réticulation est une vulcanisation.

Dans une autre forme de réalisation le traitement de réticulation est une polymérisation à froid.

Dans un mode opératoire la matrice est sous forme d'un latex.

Les fibres creuses sont alors traitées à l'aide d'un agent de pontage, comme un silane organo fonctionnel dans le cas de fibres de verre préalablement à leur incorporation dans le latex.

Dans un autre mode opératoire, la matrice est sous forme d'une dissolution.

Les fibres creuses sont alors incorporées à la matrice simultanément à l'adjonction à cette dernière d'un agent de pontage fibres-élastomère.

La matrice peut être sous forme liquide.

En variante elle est sous forme de poudre.

La poudre est avantageusement obtenue par broyage cryogénique d'un élastomère seul ou d'un mélange d'élastomères et d'ingrédients comme des charges, des agents de protection et des agents de vulcanisation.

L'invention vise également un procédé pour la fabrication d'un matériau du type ci-dessus, caractérisé en ce que le produit homogène constitué par la matrice et la charge de fibres creuses est déposé sous forme d'une couche mince sur un support, en ce que ladite couche est soumise, le cas échéant, à une coagulation, puis à un séchage et en ce que ces opérations sont répétées jusqu'à obtention de l'épaisseur souhaitée du matériau qui est alors soumis au traitement de réticulation, comme une vulcanisation.

Un moyen d'isolation thermique, suivant l'invention, utilisable notamment pour le calorifugeage de canalisations de transport d'un fluide présentant un gradient de température avec l'espace environnant, comme une conduite de transport d'huile ou de gaz de champ pétrolier off-shore, ou une canalisation de chauffage urbain, est caractérisé en ce qu'il comprend un manchon en le matériau défini ci-dessus, ledit manchon étant limité sur ses faces frontales antérieure et postérieure par des surfaces ondulées de formes conjuguées permettant l'emboîtement de manchons adjacents.

Dans une réalisation avantageuse, dans laquelle la canalisation proprement dite est revêtue d'une couche anti-corrosion en soi connue, les manchons sont enfilés à glissement sur ladite couche et solidarisée avec elle à l'aide d'adhésifs à haut module, en particulier du type époxy.

Complémentairement, des manchons adjacents sont solidarisés entre eux au moyen d'adhésifs à bas module, en particulier du type polyuréthanne, polysulfure et/ou polychloroprène.

Dans une autre réalisation de calorifugeage d'éléments de pipe-line, les fibres creuses individuelles, ou sous forme d'un mat, sont enroulées sur le tube métallique garni de sa couche anti-corrosion, la matrice d'élastomère est rapportée sur lesdites fibres, - préalablement traitées par un agent de pontage et par un promoteur d'adhérence -, et l'ensemble est soumis à un traitement de réticulation comme une vulcanisation ou une polymérisation à froid.

L'invention sera bien comprise par la description qui suit, dans laquelle les exemples donnés le sont à titre d'illustration de l'invention, sans quelque caractère limitatif que ce soit.

Pour l'obtention d'un matériau de faible conductivité thermique, de l'ordre de 100 mWm$^{-1}$K$^{-1}$, résistant à des températures de l'ordre de 120°C, pratiquement dépourvu de fluage à cette température sous une pression hydrostatique de l'ordre de 40 bars et qui, en outre, soit suffisamment souple pour pouvoir subir un allongement de 7 à 10 % sans rupture et sans perte de ses propriétés, l'invention prévoit de noyer une charge de fibres creuses dans une matrice d'élastomère.

De façon avantageuse, la proportion de fibres creuses est de 30 à 80 % en volume par rapport à la matrice.

L'utilisation d'un élastomère, comme du catouchouc naturel, du polychloroprène, des copolymères styrène-butadiène (SBR), des copolymères-butadiène-acrylonitrile (NBR), du polynorbornène, des éthylène-propylène-diènes monomères (EPDM), des caoutchouc butyle, des élastomères de polyuréthanne (dérivés de polyesters ou de polyéthers), etc... permet d'obtenir pour le matériau de l'invention les caractéristiques de souplesse recherchée, tandis que l'utilisation de fibres creuses en verre ou en matière synthé tique permet l'obtention d'un faible coefficient de conductibilité thermique tout en assurant les qualités requises de résistance à la pression en raison de la forme cylindrique des constituants de la charge à laquelle sont attachés des propriétés intrinsèques spécifiques.

L'invention prévoit, dans un premier mode opératoire, d'effectuer le mélange des fibres creuses et de l'élastomère à l'état liquide en incorporant lesdites fibres à la matrice alors que celle-ci est sous forme d'un latex, et de la façon décrite dans la Demande de Brevet français précitée lorsque lesdites fibres sont en verre.

Dans le cas de fibres en une autre matière c'est un processus analogue qui est mis en oeuvre.

Dans un second mode opératoire, l'invention prévoit l'incorporation des fibres creuses dans une dissolution d'élastomère.

Dans encore un autre mode de réalisation, l'invention prévoit de réaliser le mélange de fibres creuses et de la matrice élastomère en incorporant lesdites fibres creuses, - préalablement traitées pour permettre leur adhérisation satisfaisante ultérieure à la matrice -, dans un élastomère à l'état liquide.

Un tel procédé peut être mis en oeuvre pour les élastomères que l'on trouve dans le commerce sous cette forme, qu'il s'agisse de mono ou de bi-composants, c'est-à-dire pour des élastomères du type de ceux connus sous le nom de nitriles liquides, de polybutadiènes ou d'élastomères de polyuréthanne et autres.

Après obtention d'un mélange homogène de fibres creuses et d'élastomère à l'état liquide, on procède comme indiqué dans la Demande précitée de la Demanderesse.

Dans encore un autre mode de réalisation, les fibres creuses sont incorporées à l'élastomère alors que celui-ci est sous forme pulvérulente et,là aussi, comme dans la Demande de Brevet français précitée N° 85-12332 de la Demanderesse et avec le matériel décrit dans cette Demande.

L'invention est illustrée ci-après, et sans que ces indications aient quelque caractère limitatif que ce soit, par les exemples suivants mettant en oeuvre différentes formules de matériau d'isolation thermique selon l'invention.

## I.- MATERIAU OBTENU A PARTIR D'UN LATEX

## EXEMPLE I

On prépare un latex dont les proportions en parties en poids, par rapport au caoutchouc, sont les suivantes :

| | |
|---|---|
| Latex de caoutchouc naturel (NR) | 100 |
| Soude, pour statilisation du latex | 0,3 |
| Soufre | 1,5 |
| Oxyde de zinc | 1,5 |
| Wingstay L (un produit anti-oxygène vendu sous cette dénomination par la Société GOOD YEAR) | 1,0 |
| MBT Zn (mercaptobenzothiazole de zinc à titre d'accélérateur de vul-canisation) | 1,2 |
| DEDC Zn (diéthyldithiocarbamate de zinc à titre d'accélérateur de vul-canisation | 0,05 |

On ajoute à ce latex environ 50 % en poids de fibres creuses de polyester, telles que celles vendues par la Société RHONE-POULENC sous la dénomination X403 et qui sont des fibres de polyester bilame d'un diamètre de l5 µ environ et d'une longueur moyenne de 55 mm, lesquelles ont été traitées, préalablement à leur incorporation au latex, à l'aide d'un promoteur d'adhérence comme celui vendu par la Société I.C.I. sous le nom de PEXUL. Après mélange intime des fibres et du latex, on procède comme décrit dans la Demande de Brevet français précitée en réfé rence aux Exemples l et 2.

II.- MATERIAU OBTENU A PARTIR D'UNE DISSOLUTION

EXEMPLE 2

On prépare tout d'abord la composition suivante en parties en poids par rapport au caoutchouc :

| | |
|---|---|
| Polychloroprène du type de celui ven-du par la Société DISTIGIL sous la dénomination BUTACLOR M C 322 | 100 |
| Noir de carbone | 60 |
| Plastifiant aromatique | 16 |
| Oxyde de magnésium | 4 |
| Oxyde de zinc | 5 |
| Acide stéarique | 0,5 |
| Anti-oxygène | 4 |
| Accélérateur ETU | 0,5 |
| Accélérateur DTMT | 0,5 |

On prépare ensuite une dissolution de caoutchouc en mélangeant 2,5 parties en poids de trichloréthylène pour une partie en poids de la composition.

On ajoute ensuite à la dissolution ainsi préparée entre 30 et 70 % en poids de fibres creuses de polyester, comme celles vendues par la Société DU PONT DE NEMOURS sous la marque DACRON et qui sont livrées en fragments d'une longueur d'environ 55 mm, avec un denier d'environ 5,8.

En variante, les fibres creuses sont des fibres en polyester siliconées, telles que vendues par la Société I.C.I. ou des fibres acryliques, telles que vendues par la Société SAINT MACLOU, ou encore des fibres polyester

4

frisées du type de celles vendues par la Société ENKA.

Il apparaît ainsi que le matériau selon l'invention présente de bonnes qualités d'isolation thermique pour le but recherché, avec un coefficient $\lambda$ de l'ordre de 100 à 150 mWm$^{-1}$K$^{-1}$, ainsi que de bonnes caractéristiques de résistance à la pression tout en étant facilement déformable.

En outre, l'adhérisation parfaite des fibres creuses à la matrice dans laquelle elles sont noyées confère au matériau selon l'invention d'excellentes propriétés mécaniques.

Le matériau selon l'invention trouve une application particulièrement avantageuse dans la protection des conduits de transport de fluide chaud, qu'il s'agisse de vapeur d'eau dans des canalisations de chauffage urbain ou de gaz ou d'huile dans des pipe-lines sous-marins.

Dans ce dernier cas, en particulier, l'invention prévoit de conformer le matériau d'isolation thermique suivant des manchons enfilés sur le conduit à calorifuger ou, en variante, et compte tenu des qualités de souplesse et de déformabilité du matériau selon l'invention, la gaine de protection est réalisée par enroulement et collage sur le conduit d'une bande de matériau, tel que défini ci-dessus.

Dans encore un autre mode de réalisation de calorifugeage d'éléments de pipe-line, des fibres creuses d'un denier comparable à celui défini ci-dessus, mais sous forme de fibres continues, individuelles ou en mat, sont enroulées sur le tube métallique garni d'une couche anti-corrosion et constitutif d'un élément de pipe-line.

Après que les fibres, - préalablement traitées par un agent de pontage ou un promoteur d'adhérence -, aient été mises en place, on prépare un composant A, dont les proportions en parties en poids sont les suivantes :

| | |
|---|---|
| Polybutadiène R45 HT (de la Société ARCO) | 100 |
| Santiciser 261 (un plastifiant vendu sous cette dénomination par la Société MONSANTO) | 30 |
| Irganox 1076 (un anti-oxydant vendu sous cette dénomination par la Société CIBA-GEIGY) | 0,5 |
| No-air (un anti-mousse vendu sous cette dénomination par la Société BÄRLOCHER) | 0,35 |

Après préparation par mélange soigneux des constituants du composant A, on procède à un dégazage pendant une durée qui peut être de l'ordre de 30 minutes.

On incorpore ensuite dans le composant A, 12,1 parties en poids d'un isocyanate (composant B), par exemple celui vendu par la Société UPJOHN sous la dénomination ISONATE 143 L.

Le mélange des composants A et B est ensuite coulé sur les fibres pour les noyer et l'ensemble est conservé à température ambiante durant 24 heures pour le traitement de récitulation.

## Revendications

1.- Matériau d'isolation thermique comportant une charge noyée dans une matrice réalisée en un matériau appartenant à la famille des élastomères, caractérisé en ce que ladite charge est sous forme de fibres creuses.

2.- Matériau selon la revendication 1, caractérisé en ce que les fibres creuses sont des fibres de verre.

3.- Matériau selon la revendication 1, caractérisé en ce que les fibres creuses sont des fibres de polyester, de polyamide ou de polyacrylonitrile.

4.- Matériau selon l'une quelconque des revendications précédentes, caractérisé en ce que les fibres creuses sont des fibres continues, individuelles ou en mat et d'un denier compris entre 3 et 40 décitex.

5.- Matériau selon l'une quelconque des revendications 1 à 3, caractérisé en ce que les fibres creuses ont une longueur comprise entre 5 et 60 mm et un denier compris entre 3 et 40 décitex.

6.- Matériau selon l'une quelconque des revendications précédentes, caractérisé en ce que les fibres creuses sont fermées à leurs extrémités.

7.- Matériau d'isolation thermique selon la revendication I, caractérisé en ce que la proportion de fibres creuses est de 30 à 80 % en volume par rapport à la matrice.

8.- Matériau d'isolation thermique selon la revendication I, caractérisé en ce que les élastomères sont du type caoutchouc naturel, polychloroprène, copolymère styrène-butadiène (SBR), copolymère butadiène-acrylonitrile (NBR), polynorbornène, éthylène-propylène-diènes monomères (EPDM), caoutchoucs butyle, élastomères de polyuréthanne et analogues.

9.- Matériau selon l'une quelconque des revendications précédentes, caractérisé en ce qu'il comprend en outre, pour la liaison des fibres creuses à la matrice, un agent de pontage et/ou un promoteur d'adhérence.

10.- Matériau d'isolation thermique selon la revendication 9, caractérisé en ce que ledit agent de pontage et/ou promoteur d'adhérence est présent dans une proportion comprise entre I et I0 % en poids par rapport à la matrice élastomère.

II.- Matériau d'isolation thermique selon l'une quelconque des revendications précédentes, caractérisé en ce que sa densité est comprise entre environ 0,4 et 0,75 et en ce que son coefficient de conductivité thermique $\lambda$ est compris entre environ I00 et I50 mWm$^{-1}$K$^{-1}$.

12.- Procédé pour la fabrication d'un matériau selon l'une quelconque des revendications précédentes, caractérisé en ce que l'on incorpore une charge de fibres creuses dans une matrice à l'état liquide ou pulvérulent, en ce qu'on mélange la charge et la matrice sans application d'efforts de cisaillement importants jusqu'à obtention d'un produit homogène et en ce qu'on soumet le produit à un traitement de réticulation.

13.- Procédé selon la revendication I2, caractérisé en ce que le traitement de réticulation est une vulcanisation.

14.- Procédé selon la revendication I2, caractérisé en ce que le traitement de réticulation est une polymérisation à froid.

15.- Procédé selon la revendication I2, caractérisé en ce que la matrice est sous forme d'un latex.

16.- Procédé selon la revendication I2, caractérisé en ce que la matrice est sous forme d'une dissolution.

17.- Procédé selon la revendication I2, caractérisé en ce que la matrice est sous forme liquide.

18.- Procédé selon la revendication I2, caractérisé en ce que la matrice est sous forme de poudre.

19.- Procédé selon l'une quelconque des revendications I2 à I8, caractérisé en ce que la proportion de fibres creuses introduite dans la matrice est comprise entre 30 et 80 % en volume par rapport à ladite matrice.

20.- Moyen d'isolation thermique, utilisable notamment pour le calorifugeage de canalisations de transport d'un fluide présentant un gradient de température avec l'espace environnant, comme une conduite de transport d'huile ou de gaz de champ pétrolier off-shore, ou une canalisation de chauffage urbain, caractérisé en ce qu'il comprend un manchon en le matériau selon l'une quelconque des revendications I à II.

21.- Dispositif de calorifugeage de canalisation de transport d'un fluide présentant un gradient de température avec l'espace environnant, comme une conduite de transport d'huile ou de gaz de champ pétrolier off-shore, ou une canalisation de chauffage urbain, caractérisé en ce qu'il comprend une multiplicité de manchons selon la revendication 20, solidarisés les uns aux autres et, le cas échéant, avec une couche anti-corrosion, en soi connue, qui garnit ladite canalisation.

22.- Procédé de fabrication d'un dispositif de calorifugeage d'une canalisation comportant une multiplicité d'éléments en tube métallique garni d'une couche anti-corrosion, caractérisé en ce qu'on enroule sur ladite couche des fibres creuses individuelles ou sous forme d'un mat, en ce qu'on rapporte sur lesdites fibres, - préalablement traitées par un agent de pontage et/ou un promoteur d'adhérence -, une matrice en un élastomère et en ce qu'on soumet l'ensemble à un traitement de réticulation comme une vulcanisation ou une polymérisation à froid.

23.- Procédé selon la revendication 22, caractérisé en ce que lesdites fibres creuses sont en verre, en polyester, en polyamide ou en polyacrilonitrile d'un denier compris entre 3 et 40 décitex et en ce que la matrice est un élastomère choisi parmi le caoutchouc naturel, le polychloroprène, les copolymères styrène-butadiène (SBR), les copolymères butadiène-acrylonitrile (NBR), le polynorbornène, les caoutchoucs butyle, les éthylène-propylène-diènes monomères (EPDM) et les élastomères de polyuréthanne (dérivés de polyesters ou de polyéthers) ou analogues.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | BE-A- 754 170 (GLANZSTOFF AG)<br><br>* Revendications; page 3, alinéa 5 - page 6, alinéa 2 *<br><br>--- | 1,3,5,<br>7,8 | B 29 C 67/16<br>C 08 J 9/00<br>C 08 K 7/02<br>F 16 L 59/02 |
| A | US-A-4 263 184 (T.J. LEO)<br><br>* Résumé; revendications *<br><br>--- | 1,12,<br>15 | |
| A | EP-A-0 060 664 (TBA)<br><br>* Résumé; revendications; exemples *<br><br>--- | 1,2,8-<br>10,12 | |
| A | GB-A-1 372 845 (VICKERS)<br>* Revendications; page 3, lignes 7-40 *<br><br>--- | 20,21 | DOMAINES TECHNIQUES RECHERCHES (Int. Cl.4) |
| A | US-A-3 856 721 (L.E. FRITSCHEL)<br>* Résumé *<br><br>--- | 1 | C 08 K<br>C 08 J<br>B 29 D<br>B 29 C<br>F 16 L<br>B 01 D<br>D 04 H |
| A | US-A-4 287 245 (S. KIKUCHI)<br>* Résumé; revendications; colonne 1, lignes 26-41; colonne 5, lignes 42-63; colonne 6, lignes 1-15; figures *<br><br>---      -/- | 20-23 | |

Le présent rapport de recherche a été établi pour toutes les revendications

| Lieu de la recherche | Date d'achèvement de la recherche | Examinateur |
|---|---|---|
| LA HAYE | 07-01-1987 | VANHECKE H. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl.4) |
|---|---|---|---|
| A | FR-A-1 239 174 (ESPETVEDT) <br> * Résumé; page 1, colonne 2, alinéa 6; page 1, colonne 2, dernier alinéa - page 2, colonne 1, alinéa 3; figures * | 20-23 | |
| A | US-A-4 400 426 (W.E. ALDRICH) <br> * Résumé; revendications; colonne 2, lignes 7-26 * | 1,3 | |

DOMAINES TECHNIQUES RECHERCHES (Int. Cl.4)

Le present rapport de recherche a été établi pour toutes les revendications

| Lieu de la recherche | Date d achevement de la recherche | Examinateur |
|---|---|---|
| LA HAYE | 07-01-1987 | VANHECKE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou apres cette date
D : cité dans la demande
L : cité pour d'autres raisons

& : membre de la même famille, document correspondant

OEB Form 1503 03 82